# EUROPEAN PATENT SPECIFICATION

(11) **EP 1 304 283 B1**
(45) Date of publication and mention of the grant of the patent: **09.02.2005**
(21) Application number: 02023409.2
(22) Date of filing: 18.10.2002
(51) Int. Cl.: B62K 11/10, B62K 19/46, B62M 7/06, F02M 37/10

(54) **Scooter type motor cycle**
Rollerartiges Motorrad
Motocyclette du type scooter

(30) Priority: 22.10.2001 JP 2001323746
(43) Date of publication of application: 23.04.2003
(73) Proprietor: YAMAHA HATSUDOKI KABUSHIKI KAISHA, Iwata-shi Shizuoka-ken (JP)
(72) Inventor: Okamoto, Yasuo, Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(56) References cited:
- EP-A- 0 581 310
- EP-A- 1 081 039
- EP-A- 1 122 159
- DE-A- 3 644 645
- DE-A- 19 938 273
- FR-A- 2 737 877
- US-A- 4 871 041
- PATENT ABSTRACTS OF JAPAN vol. 014, no. 060 (M-0931), 5 February 1990 (1990-02-05) & JP 01 285476 A (YAMAHA MOTOR CO LTD), 16 November 1989 (1989-11-16)
- PATENT ABSTRACTS OF JAPAN vol. 1998, no. 09, 31 July 1998 (1998-07-31) & JP 10 100959 A (YAMAHA MOTOR CO LTD), 21 April 1998 (1998-04-21)

## Description

The present invention relates to a scooter type motor cycle.

In a scooter type motor cycle, in many cases, there is adopted a structure of mounting an engine on a lower side of a storage box opened and closed by a seat pivotably in an up and down direction. Document EP 1081039 discloses a scooter type motor cycle according to the preamble of claim 1.

According to a general scooter type motor cycle having such a constitution, it is requested to ensure a capacity of the storage box as large as possible and keep a height of the seat as low as possible.

Meanwhile, recently, even in the above-described scooter type motor cycle, it is conceived to adopt the fuel injection valve in place of a conventional carburetor. In adopting the fuel injection valve, when it is intended to arrange a fuel injection valve while ensuring a proper clearance between the fuel injection valve and a bottom face of the storage box and ensure the capacity of the storage box, there is a concern of posing a problem that the height of the seat is increased. Meanwhile, although in order to restrain the height of the seat to be low, it is effective to form an escape recessed portion at the storage box to avoid interference with the fuel injection valve, the capacity of the storage box is sacrificed.

Further, when the above-described fuel injection valve is adopted, there is needed a fuel pump for supplying fuel at pressure suitable for fuel injection to the fuel injection valve and there is a concern of posing a problem that the height of the seat is increased or the capacity of the storage box is sacrificed depending on arrangement on the structure of the fuel pump.

In view of the above problems with conventional scooter type motor cycles, it is, therefore, an object of the invention to provide a scooter type motor cycle having an optimum arrangement of a fuel supply apparatus, an engine and a storage box without sacrificing a capacity of a storage box and increasing a height of a seat.

For a scooter type motor cycle, this object is solved in an inventive manner by a scooter type motor cycle comprising a fuel supply apparatus, a fuel supply hose connecting a fuel tank with an engine, the engine being mounted on a lower side of a storage box, opened and closed by a seat, wherein the storage box when viewed in cross-section as cut by a plane orthogonal to a center line of a vehicle, a bottom face of the storage box includes a portion constituting substantially a circular arc shape convex to a lower side.

According to a preferred embodiment, the fuel injection valve is inclined in the deviated direction relative to a vertical line.

Preferably, a fuel supply apparatus of a scooter type motor cycle having a storage box opened and closed by a seat and mounted with an engine on a lower side of the storage box, when the storage box is viewed by a cross-sectional face cut by a plane orthogonal to a center line of a vehicle, a bottom face of the storage box includes a portion constituting substantially a circular arc shape convex to a lower side, a fuel tank is mounted such that at least a portion thereof is disposed on a lower side of the bottom face of the storage box and a tank built-in type fuel pump is arranged at a portion of the fuel tank deviated from a lower end portion of the bottom face of the storage box to one side in a vehicle width direction.

Thereby, the fuel pump is attached to the fuel tank such that a delivery port thereof is directed to an outer side in the deviated direction.

Accordingly, the storage box includes the portion in which the bottom face of the storage box includes a portion constituting a substantially circular arc shape convex to the lower side in view of the cross-sectional face a fuel injection valve is arranged at a portion at which the intake manifold is connected to the cylinder head and deviatedly from the lower end portion of the bottom face of the storage box to one side in the vehicle width direction and therefore, the fuel injection valve is disposed at a portion higher than the lower end of the bottom face of the storage box, a necessary gap is easy to ensure between the fuel injection valve and the bottom face of the storage box, as a result, it is not necessary to provide a recessed portion for avoiding interference with the fuel injection valve at the storage box and a height of a seat can be avoided from being increased while ensuring the capacity of the storage box.

According to a preferred embodiment, the fuel injection valve is inclined in the deviated direction relative to the vertical line and therefore, the height of the fuel injection valve is reduced by an amount of the inclination, as a result, interference between the fuel injection valve and the bottom face of the storage box can further firmly be avoided and the height of the seat can be avoided from being increased while ensuring the capacity of the storage box.

Preferably, the fuel tank is mounted such that at least the portion is disposed on the lower side of the bottom face of the storage box, the tank built-in type fuel pump is arranged at the portion of the fuel tank deviated from the lower end portion of the bottom face of the storage box to one side in the vehicle width direction and therefore, the fuel pump is disposed at a portion higher than the lower end of the bottom face at the storage box, it is easy to ensure the necessary clearance between the fuel pump and the bottom face of the storage box, as a result, the fuel pump can be arranged without sacrificing the capacity of the storage box. Further, the capacity of the fuel tank can be increased by an amount of disposing the portion of the fuel tank on the lower side of the bottom face of the storage box.

Moreover, the delivery port of the fuel pump is attached to the fuel tank to direct to the outer side of the deviated direction and therefore, a fuel supply hose is easy to connect to the delivery port and also in this regard, the fuel pump can be arranged without sacrificing the capacity of the storage box and the capacity of the fuel tank can be increased.

Further preferred embodiments of the invention are subject to the subclaims.

In the following, an explanation will be given of a preferred embodiment of the invention in reference to the attached drawings as follows, wherein:

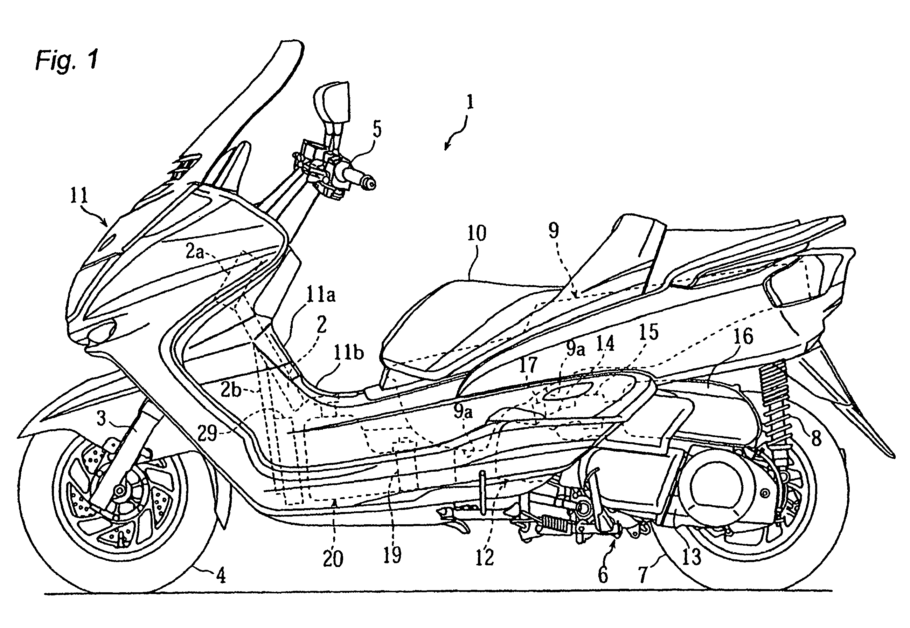

- Fig. 1: is a left side view of a scooter type motor cycle to which an embodiment of the invention is applied,

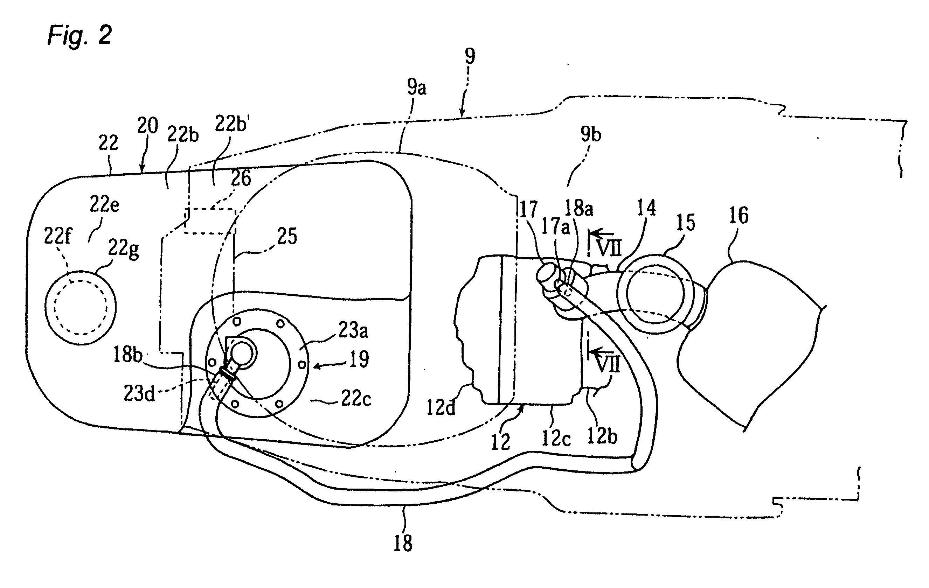

- Fig. 2: is a plane view showing a state of mounting a fuel tank and a fuel injection valve according to the embodiment,
- Fig. 3: is a left side view showing the state of attaching the fuel tank and the fuel injection valve according to the embodiment,
- Fig. 4: is a rear view(sectional view taken along a line IV-IV of Fig.3)showing the state of attaching the fuel tank according to the embodiment,
- Fig. 5: is a perspective view of an oil (fuel) level detecting apparatus according to the embodiment,

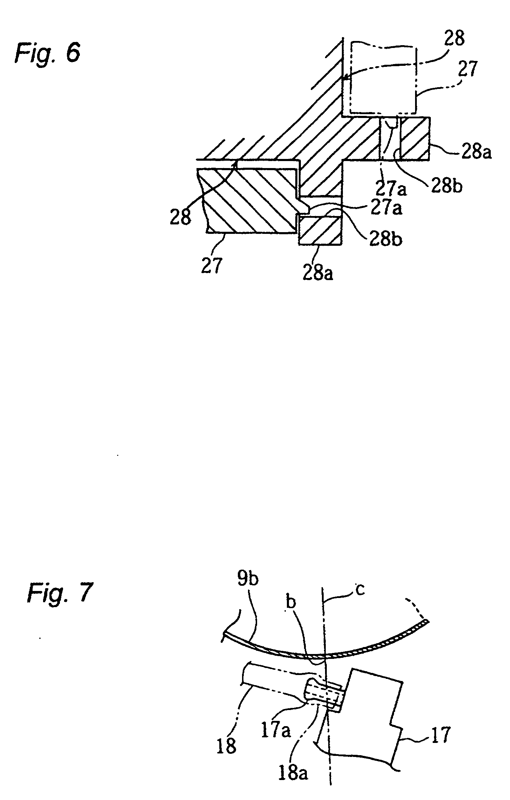

- Fig. 6: is a sectional view(sectional view taken along a line VI-VI of Fig.5)of an essential portion of the state of attaching the fuel (oil) level detecting apparatus according to the embodiment, and
- Fig. 7: is a sectional view(sectional view taken along a line VII-VII of Fig.2)of an essential portion of the state of mounting the fuel injection valve according to the embodiment.

Further, in the following detailed description of a preferred embodiment of the invention, front, rear, left and right signify front, rear, left and right when viewed in a riding state.

In the drawings, numeral 1 designates a scooter type motor cycle having and outline constitution shown below. That is, a front fork 3 is supported maneuvably in left and right direction by a head pipe 2a at a front end of a vehicle body frame 2, a front wheel 4 is axially supported by a lower end of the front fork 3 and a steering handle 5 is fixed to an upper end thereof. Further, a unit swing type engine unit 6 is axially supported by substantially a central portion of the vehicle body frame 2 pivotably in the up and down direction, a rear wheel 7 is axially supported by a rear end portion of the engine unit 6 and a rear wheel suspension 8 is interposed between the rear end portion and a rear end portion of the vehicle body frame 2. Further, a storage box 9 is arranged on an upper side of the engine unit 6 and the storage box 9 is made openable and closeable by a seat 10. Furthermore, portions substantially excluding the front wheel 4 and the rear wheel 7 such as a front side portion of the steering handle 5, a surrounding of the entire vehicle body frame 2, a surrounding of a front portion of the engine unit 6, a surrounding of the storage box 9 and the like, are covered by a vehicle body cover 11 as a whole.

The storage box 9 is provided with a length ranging from an upper side of substantially a middle of the front and rear wheels 4 and 7 to an upper side of a rear edge of the rear wheel 7, and a front portion 9a thereof is formed substantially in a spherical shape bulged significantly to a lower side in a convex shape and to be able to contain deeply in a helmet. Further, when the portion of the front portion 9a is viewed by a cross-sectional face cut by a plane orthogonal to a center line of the vehicle, a bottom face of the portion of the front portion 9a is formed substantially in a circular arc shape convex to the lower side and a height of the bottom face is increased from a lower end a thereof toward an outer side in a vehicle width direction. Further, a middle portion 9b of the storage box 9 is shallower than the front portion 9a, a bottom face thereof is similarly formed in a circular arc shape although a radius of curvature thereof is significantly larger than that of the front portion 9a when viewed by a cross-sectional face and a height of the bottom face is increased from a lower end b thereof toward the outer side in the vehicle width direction.

The engine unit 6 is constituted by being integrally coupled with a water-cooled type 4 cycle single cylinder engine main body 12 and a transmission case 13 containing a V-belt continuously variable type transmission mechanism, and the rear wheel 7 is axially supported by the rear end portion of the transmission case 13 and a lower end portion of the rear wheel suspension 8 is connected thereto. Further, the engine main body 12 is laminated and coupled with a cylinder body 12b, a cylinder head 12c and a head cover 12d at a front wall of a crank case 12a to extend to a front side in substantially horizontal as a whole.

The engine main body 12 is disposed on a lower side of the middle portion 9b of the storage box 9. Further, an outer connection port 12e of an intake port continuous to a combustion chamber at inside thereof is disposed at an upper face of the cylinder head 12c. An intake manifold 14 connected to the outer connection port 12e is extended to a rear side on the lower side of the middle portion 9b of the storage box 9, a rear end portion thereof is connected with a throttle body 15 and the throttle body 15 is connected with an air cleaner 16. The air cleaner 16 is arranged on an upper side of the transmission case 13 and is fixed to the transmission case 13.

A left end of a valve shaft 15a of a butterfly type throttle valve arranged at inside of the throttle body 15, is fixedly mounted with a throttle pulley 15b and two pieces of throttle cables 15c, 15c hung to the throttle pulley 15b are connected to a throttle grip of the steering handle 5.

Further, a fuel injection valve 17 is mounted to a vicinity of a portion of the intake manifold 14 connected to the cylinder head 12c. The fuel injection valve 17 is disposed at a portion of the intake manifold 14 deviated from the lower end b of the bottom face of the middle portion 9b of the storage box 9 to one side in the vehicle width direction, specifically, to the right side and inclined to the right side and the front side relative to a vertical line c. Further, a fuel supply port 17a of the fuel injection valve 17 is directed to the rear side and the left side of the vehicle and the fuel supply port 17a is fixedly connected with a downstream end portion 18a of a fuel supply hose 18.

The fuel supply hose 18 is extended on the left side of the vehicle from the fuel injection valve 17 through an interval between the intake manifold 14 and the bottom face of the middle portion 9b, extended to the front side by passing the left side of the engine main body 12 and the upstream end 18b is connected to a delivery port 23d of a fuel pump 19, mentioned later. The fuel pump 19 is arranged to be inserted into a fuel tank 20 and the fuel tank 20 is arranged such that the fuel tank 20 is disposed on the front side of the engine main body 12 and a rear half portion thereof is disposed on the lower side of the front portion 9a of the storage box 9.

The fuel tank 20 is formed substantially in a rectangular shape in plane view and is of a type of being divided in two bonded with a lower half portion 21 made of sheet metal and an upper half portion 22 similarly made of sheet metal. A flange portion 21 a formed by being bent to fold at an upper side opening peripheral edge of the lower half portion 21 and a flange 22a formed by being bent to fold at a lower side opening peripheral edge of the upper half portion 22, are welded to bond.

Whereas a bottom face 21 b of the lower half portion 21 is formed to be substantially flat, a ceiling face 22b of the upper half portion 22 is formed to be high toward the front portion as a whole and formed in a shape capable of ensuring a capacity while avoiding interference with the front portion 9a of the storage box 9. An oil supply pipe 22f is provided to project at a front projected portion 22e disposed at the highest location of the ceiling face 22b and an oil supply cap 22g mounted attachably and detachably to and from the oil supply pipe 22f, faces to an outer side when a lid 11 b formed openably and closeably at a portion of a foot board 11a of vehicle body cover 11, is opened.

Further, at a left side portion of a rear half portion of the ceiling face 22b, there is formed a stepped portion 22c for attaching the fuel pump 19 to be lower by one stage. The fuel pump 19 is fixed to the fuel tank 20 by inserting a pump main body 23 from an attaching hole 22d formed at the stepped portion 22c into the fuel tank 20 toward a lower side substantially in the vertical direction and fixing a flange portion 23a formed at an upper end portion of the pump main body 23 to a peripheral edge of the attaching hole 22d by fastening bolts. The pump main body 23 includes a pump mechanism and a filter 23c is attached to an intake port 23b at a lower end thereof.

Further, the delivery port 23d formed at the upper end portion of the pump main body 23 projected to the outer side, is directed to a slightly skewed front side on the left side and the delivery port 23d is connected with a upstream end portion 18b of the fuel supply hose 18 to detour to the front side of the lower bulge portion of the front portion 9a of the storage box 9 to avoid interference therewith.

Here, the fuel pump 19 is arranged to deviate to the left side of the vehicle. More particularly details, the fuel pump 19 is deviated to the left side of the lower end a from the bottom face of the front portion 9a of the storage box 9. Further, the delivery port 23d of the fuel pump 19 is directed to an outer side in the deviated direction.

Further, numeral 29 designates a radiator and the radiator is arranged to dispose on the front side of the fuel tank 20 and between left and right down tubes 2b, 2b when viewed from the front face of the vehicle and arranged to erect substantially in a vertical state.

An oil level detecting unit 24 is mounted to the pump main body 23 disposed at inside of the fuel tank 20 of the fuel pump 19. The oil level detecting unit 24 is made of metal or made of resin and is of a structure in which a float 26 comprising a hermetically-closed semicylindrical member is fixed to a front end portion of an arm 25 comprising a rod-like member and a base end portion of the arm 25 is supported by a base member 27 pivotably in the up and down direction. At inside of the base member 27, there is contained a censer(potentiometer)for generating a voltage signal of a magnitude in accordance with a pivoting angle of the arm 25.

The base member 27 can selectively be mounted to either one of two sets of first and second attachment seats 28 and 28' formed at outer side faces of the pump main body 23. The attachment seats 28 and 28' are arranged contiguously to each other to constitute 90 degrees. Each of the attachment seats 28 and 28' includes a pair of attachment rails 28a, 28a formed in accordance with a width dimension of the base member 27 and when the base member 27 is pushed between the respective attachment rails 28a, 28a, lock pieces 27a projected at left and right edge faces of the base member 27, are locked to lock grooves 28b formed at the attachment rails 28a, thereby, the base member 27 and therefore, the oil level detecting unit 24 is mounted to the fuel pump 19. Further, when the oil level detecting unit 24 is removed, locking between the lock piece 27a and the lock groove 28b is released by inserting a minus driver or the like between the base member 27 and the attachment seat 28 or 28'.

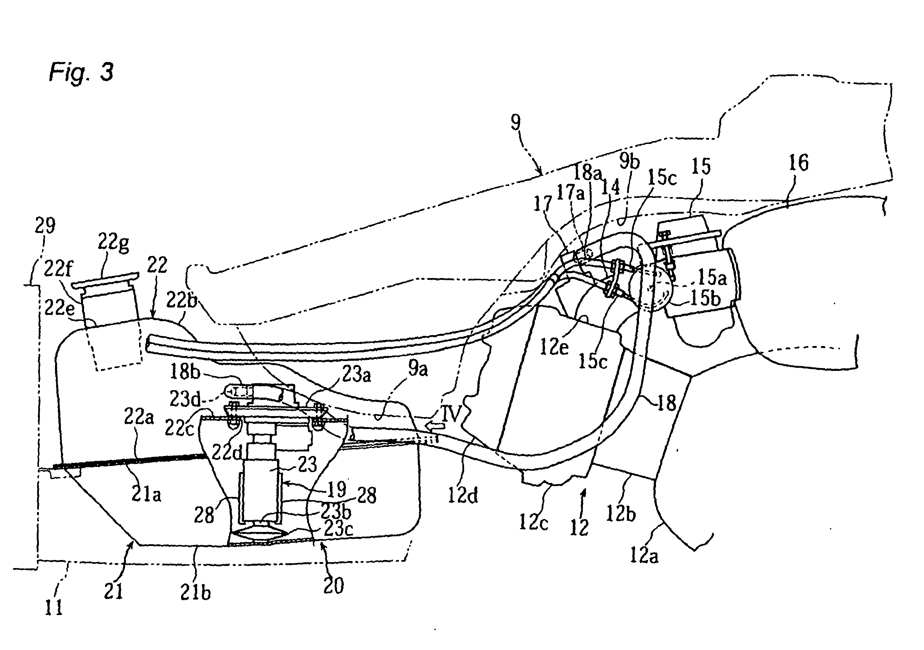

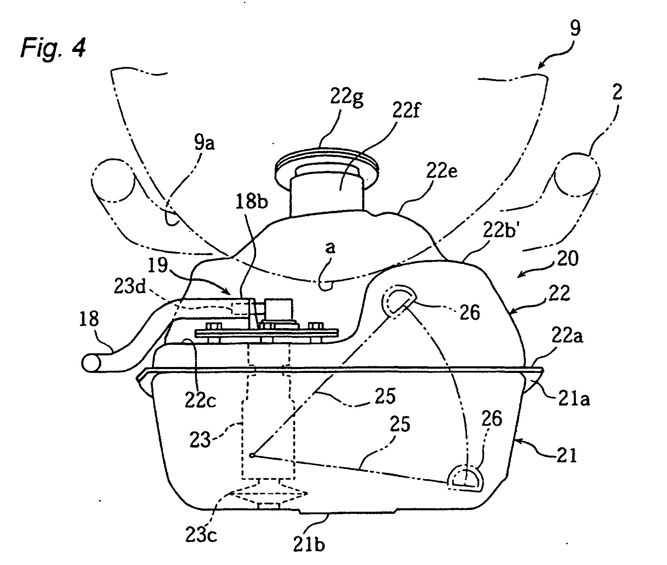

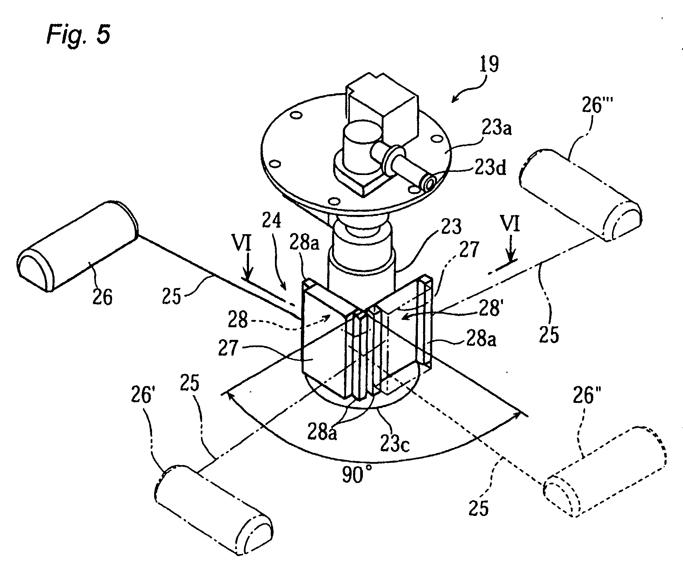

Here, as shown by bold lines in Fig.5, according to the embodiment, the base member 27 is mounted to the first attachment seat 28 on the left side of Fig.5 and therefore, the float 26 is disposed in a state of being projected to the left side of Fig.5. When the float 26 is viewed in a state of being mounted to inside of the fuel tank 20, as shown by two-dotted chain lines of Fig.4(viewed in an arrow mark VI direction of Fig.3), the float 26 is disposed at a comparatively high portion 22b' contiguous to the stepped portion 22c of the fuel tank 20. As a result, a pivoting range of the float 26 in the up and down direction is ensured comparatively widely and an oil level substantially in a filled up state can be detected.

Further, in Fig.5, when the base member 27 of the oil level detecting unit 24 is mounted to the second attachment seat 28' on the right side, as shown by two-dotted chain lines, the float 26' is rotated by 90 degrees relative to the above-described position. In this way, the float can be made pivotable in the up and down direction at two locations different from each other by 90 degrees. Further, there can also be adopted the detecting unit 24 constituted such that the float 26" is disposed in a state shown by broken lines and when the oil level detecting unit having such a constitution is mounted to the side of the second attachment seat 28' on the right side, the float 26"' is disposed in a state shown by one-dotted chain lines.

Next, an explanation will be given of operation and effect of the embodiment.

With regard to the storage box 9, the bottom face of the storage box 9 includes the portions substantially in the circular arc shape convex to the lower side in view of the cross-sectional face, specifically, the front portion 9a and the middle portion 9b, the fuel injection valve 17 is arranged to the portion of the intake manifold 14 connected to the cylinder head 12c and deviatedly from the lower end b of the bottom face of the middle portion 9b of the storage box 19 to the right side in the vehicle width direction and therefore, the fuel injection valve 17 can be arranged by interposing a proper clearance between the fuel injection valve 17 and the bottom face of the middle portion 9b of the storage box 9, it is not necessary to provide a recessed portion for avoiding interference with the fuel injection valve 17 at the storage box 9 and the height of the seat can be avoided from being increased while ensuring the capacity of the storage box 7.

Further, the fuel injection valve 17 is inclined in the deviated direction relative to the vertical line c and therefore, interference between the fuel injection valve 17 and the storage box 9 can further firmly be avoided and the height of the seat can be avoided from being increased while ensuring the capacity of the storage box 9.

Furthermore, since the tank built-in type fuel pump 19 is arranged at the portion deviated from the lower end a of the bottom face of the front portion 9a of the storage box 9 to the left side in the vehicle width direction and deviated to the front side, the fuel pump can be arranged without sacrificing the capacity of the storage box 9. Further, the fuel tank 20 is mounted such that the rear half portion is disposed on the lower side of the bottom face of the front portion 9a of the storage box 9 and therefore, the capacity of the fuel tank 20 can be increased.

Further, the fuel pump 19 is attached to the fuel tank 20 such that the delivery port 23d is directed to the outer side in the deviated direction and therefore, arrangement and connection of the fuel supply hose 18 is facilitated and also in this regard, the fuel pump 19 can be arranged without sacrificing the capacity of the storage box 9 and the capacity of the fuel tank 20 can be ensured.

Further, the first and second attachment seats 28 and 28' mounted with the base members 27 of the oil level detecting unit 24 selectively attachable and detachable, are formed at side faces of the pump main body 23 of the fuel pump 19 to constitute 90 degrees and therefore, the float 26 can be made pivotable in the up and down direction at two positions in the fuel tank 20 constituting 90 degrees(position shown by bold lines and position shown by two-dotted chain lines in Fig.5)and a position firmly detecting the oil level can be selected based on a shape of a tank or the like, which can deal with a fuel tank having a different shape.

Further, by pushing the base member 27 of the oil level detecting unit 24 between the left and right attachment rails 28a, 28a, the lock piece 27a of the base member 27 is locked to the lock groove 28b of the attachment rail 28a to thereby mount the oil level detecting unit 24 and therefore, operation of mounting the oil level detecting unit 24 is facilitated.

Further, although according to the above-described embodiment, an explanation has been given of the case of providing the attachment seats 28 at two locations, the attachment seats 28 may naturally be provided at three or more locations. Further, although an explanation has been given of the case of constituting 90 degrees by the attachment seats, a plurality of attachment seats can naturally be formed to be contiguous to each other by an angle other than 90 degrees.

Thereby, it is possible to provide a fuel supply apparatus of a scooter type motor cycle capable of properly arranging a fuel injection valve and a fuel pump without sacrificing a capacity of a storage box or increasing a height of a seat.

Accordingly, in a fuel supply apparatus of a scooter type motor cycle 1 having a storage box 9 opened and closed by a seat 10 and mounted with an engine on a lower side of the storage box 9, when the storage box 9 is viewed by a cross-sectional face cut by a plane orthogonal to a center line of a vehicle, a bottom face of the storage box 9 includes a portion constituting substantially a circular arc shape convex to a lower side, the engine is mounted such that an axis line of a cylinder thereof is made substantially horizontal, an intake manifold 14 is connected to an upper face of a cylinder head 12c and a fuel injection valve 17 is arranged at a portion at which the intake manifold 14 is connected to the cylinder head 12c and deviatedly from a lower end portion a, b of the bottom face of the storage box to one side in a vehicle width direction.

## Claims

1. Scooter type motorcycle (1) comprising a fuel supply apparatus, a fuel supply hose (18) connecting a fuel tank (20) with an engine (12), the engine (12) being mounted on a lower side of a storage box (9), opened and closed by a seat (10), wherein the storage box (9) when viewed in cross-section as cut by a plane orthogonal to the longitudinal axis of a vehicle, a bottom face of the storage box (9) includes a portion (9a) constituting substantially a circular arc shape convex to a lower side,
**characterized in that**
a fuel injection valve (17) is disposed at a portion of the intake manifold (14) of the engine (12) deviated to one side in the vehicle width direction from a lower end portion (b) of the bottom face of the storage box (9) formed with said circular arc shape convex to said lower side, said fuel injection valve (17) being inclined to said one side in the vehicle width direction and further inclined towards a front side of the motorcycle (1) relative to a vertical axis thereof.

2. Scooter type motorcycle according to claim 1, **characterized in that** said engine (12) is mounted wherein an axis line of a cylinder thereof is arranged substantially horizontally, an intake manifold (14) of said engine (12) is connected to an upper face of a cylinder head (12c) and **in that** a fuel injection valve (17) is arranged at a portion at which the intake manifold (14) is connected to the cylinder head (12c).

3. Scooter type motorcycle according to claim 1 or 2, **characterized in that** said fuel injection valve (17) is inclined relative to a vertical line (c) to one side in a vehicle width direction.

4. Scooter type motorcycle according to one of the preceding claims 1 to 3, **characterized in that** said fuel tank (20) is mounted wherein at least a portion thereof is disposed on a lower side of the bottom face of the storage box (9).

5. Scooter type motorcycle according to one of the preceding claims 1 to 4, **characterized in that** said fuel supply hose (18) is connected with an upstream end portion (18b) thereof to an outlet portion (23b) of the fuel tank (20) deviated from a lower end portion (b) of the bottom face of the storage box (9) to one side in the vehicle width direction.

6. Scooter type motorcycle according to one of the preceding claims 1 to 5, **characterized in that** a tank built-in type fuel pump (19) is arranged at a portion of the fuel tank (20) deviated from a lower end portion (b) of the bottom face of the storage box (9) to one side in the vehicle width direction.

7. Scooter type motorcycle according to one of the preceding claims 1 to 6, **characterized in that** the fuel pump (19) is attached to the fuel tank (20) such that a delivery port (23d) of the fuel pump (19) is directed to an outer side in the deviated direction, the delivery port (23d) being connected to an upstream end (18b) of the fuel supply hose (18).

## Patentansprüche

1. Motorrad der Rollerart (1), das eine Kraftstoffzuführungsvorrichtung aufweist, einen Kraftstoffzuführungsschlauch (18), der einen Kraftstofftank (20) mit einem Motor (12) verbindet, wobei der Motor (12) an einer Unterseite eines Vorratsbehälters (9) montiert ist, geöffnet und geschlossen durch einen Sitz (10), wobei der Vorratsbehälter, wenn im Querschnitt gesehen, geschnitten durch eine Ebene, die zu der Längsachse eines Fahrzeuges rechtwinklig ist, eine Bodenfläche des Vorratsbehälters (9) einen Abschnitt (9a) enthält, der eine im wesentlichen kreisförmige Bogenform konvex zu einer Unterseite bildet,
**dadurch gekennzeichnet, dass**
ein Kraftstoffeinspritzventil (17) an einem Abschnitt des Einlassverteilers (14) des Motors (12) angeordnet ist, nach einer Seite in Richtung der Fahrzeugbreite von einem unteren Endabschnitt (b) der Bodenfläche des Vorratsbehälters (9) abweichend, die mit der kreisförmigen Bogenform, konvex zu der Unterseite gebildet ist, wobei das Kraftstoffeinspritzventil (17) zu dieser einen Seite in Richtung der Fahrzeugbreite geneigt ist und außerdem weiter in die Richtung zu einer Vorderseite des Motorrades (1) im Verhältnis zu einer vertikalen Achse desselben geneigt ist.

2. Motorrad der Rollerart nach Anspruch 1, **dadurch gekennzeichnet, dass** der Motor (12) montiert ist, wobei eine Achsenlinie eines Zylinders desselben im wesentlichen horizontal angeordnet ist, ein Einlassverteiler (14) des Motors (12) mit einer oberen Fläche eines Zylinderkopfes (12c) verbunden ist und dadurch, dass ein Kraftstoffeinspritzventil (17) an einem Abschnitt angeordnet ist, an dem der Einlassverteiler (14) mit dem Zylinderkopf (12c) verbunden ist.

3. Motorrad der Rollerart nach Anspruch 1 oder 2, **dadurch gekennzeichnet, dass** das Kraftstoffeinspritzventil (17) im Verhältnis zu einer vertikalen Linie (c) nach einer Seite in Richtung der Fahrzeugbreite geneigt ist.

4. Motorrad der Rollerart nach einem der vorhergehenden Ansprüche 1 bis 3, **dadurch gekennzeichnet, dass** der Kraftstofftank (20) montiert ist, wobei zumindest ein Abschnitt desselben an einer Unterseite der Bodenfläche des Vorratsbehälters (9) angeordnet ist.

5. Motorrad der Rollerart nach einem der vorhergehenden Ansprüche 1 bis 4, **dadurch gekennzeichnet, dass** der Kraftstoffzuführungsschlauch (18) mit einem stromaufwärtigen Endabschnitt (18b) desselben mit einem Auslassabschnitt (23b) des Kraftstofftanks (20) verbunden ist, abweichend von einem unteren Endabschnitt (b) der Bodenfläche des Vorratsbehälters (9) nach einer Seite in Richtung der Fahrzeugbreite verbunden ist.

6. Motorrad der Rollerart nach einem der vorhergehenden Ansprüche 1 bis 5, **dadurch gekennzeichnet, dass** eine Kraftstoffpumpe (19) der Einbauart an einem Abschnitt des Kraftstofftanks (20), abweichend von einem unteren Endabschnitt (b) der Bodenfläche des Vorratsbehälters (9) nach einer Seite in Richtung der Fahrzeugbreite angeordnet ist.

7. Motorrad der Rollerart nach einem der vorhergehenden Ansprüche 1 bis 6, **dadurch gekennzeichnet, dass** die Kraftstoffpumpe (19) mit dem Kraftstofftank (20) derart verbunden ist, dass ein Zulieferanschluss (23d) der Kraftstoffpumpe (19) zu einer Außenseite in der abweichenden Richtung gerichtet ist, wobei der Zulieferanschluss (23d) mit einem stromaufwärtigen Ende (18b) des Kraftstoffzuführungsschlauches (18) verbunden ist.

## Revendications

1. Motocycle de type scooter comportant un dispositif d'alimentation en carburant, un tuyau d'alimentation en carburant (18) reliant un réservoir de carburant (20) à un moteur (12), le moteur (12) étant monté sur un côté inférieur d'un caisson de stockage (9), ouvert et fermé par un siège (10), dans lequel, lorsque le caisson de stockage (9) est vu en coupe selon un plan perpendiculaire à l'axe longitudinal du véhicule, une face de fond du caisson de stockage (9) comporte une partie (9a) constituant sensiblement une forme d'arc circulaire convexe vers un côté inférieur,
**caractérisé en ce que**
une soupape d'injection de carburant (17) est disposée au niveau d'une partie du collecteur d'admission (14) du moteur (12) déviée vers un côté dans la direction de la largeur du véhicule à partir d'une partie d'extrémité inférieure (b) de la face de fond de la boîte de stockage (9) formée avec ladite forme d'arc circulaire convexe vers ledit côté inférieur, ladite soupape d'injection de carburant (17) étant inclinée vers ledit côté dans la direction de la largeur de véhicule et en outre étant inclinée en direction du côté avant du motocycle (1) par rapport à un axe vertical de celui-ci.

2. Motocycle de type scooter selon la revendication 1, **caractérisé en ce que** ledit moteur (12) est monté, une ligne d'axe d'un cylindre de celui-ci étant agencée sensiblement horizontalement, un collecteur d'admission (14) dudit moteur (12) est relié à une face supérieure d'une culasse (12c) et **en ce qu'**une soupape d'injection de carburant (17) est agencée au niveau d'une partie où le collecteur d'admission (14) est relié à la culasse (12c).

3. Motocycle de type scooter selon la revendication 1 ou 2, **caractérisé en ce que** ladite soupape d'injection de carburant (17) est inclinée par rapport à une ligne verticale (c) vers un côté dans la direction de la largeur du véhicule.

4. Motocycle de type scooter selon l'une des revendications 1 à 3, **caractérisé en ce que** ledit réservoir de carburant (20) est monté, au moins une partie de celui-ci étant disposée sur un côté inférieur de la face de fond du caisson de stockage (9).

5. Motocycle de type scooter selon l'une des revendications 1 à 4, **caractérisé en ce que** ledit tuyau d'alimentation en carburant (18) est relié à sa partie d'extrémité amont (18b) à une partie de sortie (23b) du réservoir de carburant (20) déviée à partir d'une extrémité inférieure (b) de la face de fond de la boîte de stockage (9) vers un côté dans la direction de la largeur du véhicule.

6. Motocycle de type scooter selon l'une des revendications 1 à 5, **caractérisé en ce qu'**une pompe à carburant du type intégré dans un réservoir (19) est agencée au niveau d'une partie du réservoir de carburant (20) déviée à partir d'une partie d'extrémité inférieure (b) de la face de fond de la boîte de stockage (9) vers un côté dans la direction de la largeur du véhicule.

7. Motocycle de type scooter selon l'une des revendications 1 à 6, **caractérisé en ce que** la pompe à carburant (19) est reliée au réservoir de carburant (20) de telle sorte qu'un orifice de refoulement (23d) de la pompe à carburant (19) est dirigé vers un côté extérieur dans la direction déviée, l'orifice de refoulement (23d) étant relié à une extrémité amont (18b) du tuyau d'alimentation en carburant (18).
